Europäisches Patentamt

(19) **European Patent Office**

**Office européen des brevets**

(11) Veröffentlichungsnummer: **0 110 339**
**B1**

(12) **EUROPÄISCHE PATENTSCHRIFT**

(45) Veröffentlichungstag der Patentschrift:
26.11.86

(51) Int. Cl.⁴: **F 16 K 11/06**

(21) Anmeldenummer: **83111801.3**

(22) Anmeldetag: **25.11.83**

(54) **Sanitärmischventil.**

(30) Priorität: **29.11.82 DE 3244121**

(43) Veröffentlichungstag der Anmeldung:
**13.06.84 Patentblatt 84/24**

(45) Bekanntmachung des Hinweises auf die Patenterteilung:
**26.11.86 Patentblatt 86/48**

(84) Benannte Vertragsstaaten:
**AT BE CH DE FR GB IT LI NL SE**

(56) Entgegenhaltungen:
**WO-A-79/00134**
**DE-A-1 550 060**
**DE-B-2 829 848**
**FR-A-2 375 526**

(73) Patentinhaber: **FRIEDRICH GROHE ARMATURENFABRIK GmbH & CO, Hauptstrasse 137, D-5870 Hemer 1 (DE)**

(72) Erfinder: **Pawelzik, Manfred, Herringser Weg 5a, D-4770 Soest (DE)**

EP 0 110 339 B1

LIBER, STOCKHOLM 1986

## Beschreibung

Die Erfindung betrifft ein Mischventil für das Sanitärfach mit den im Oberbegriff des Anspruchs 1 angegebenen Merkmalen.

Bekannte Mischventile dieser Gattung, wie sie z.B. in Druckschrift DE-A-1550 060 beschrieben sind, bestehen im wesentlichen aus einer im Ventilgehäse unbeweglich engeordneten Ventilsitzscheibe, in der Durchbrüche für die Heranfürung von Kalt- und Warmwasser und für die Ableitung von Mischwasser vorgesehen sind. Auf dieser Ventilsitzscheibe ist zur Regulierung von und Auslaufmenge eine mit einem Überströmkanal versehene, mit Hilfe eines Griffhebels verschiebbare Steuerscheibe gelagert. Die Auslaufmenge wird dabei durch Auf- oder Abbewegung, das Mischungsverhältnis durch Verschwenken des Griffhebels eingestellt. Bei diesen Mischventilen wird die Steuerscheibe nur um relativ kleine Wegstrecken bzw. Winkelgrade bewegt, um von kaltem Wasser auf heißes Wasser umzuschalten. Noch kleiner werden die Bewegungen der Steuerscheibe wenn ein bestimmtes Mischungsverhältnis von warmem zu kaltem Wasser erreicht oder geringfügig geändert werden soll. Der mit der Steuerscheibe in Verbindung stehende Bedienungshebel ist hierbei oft nur wenig zu verstellen, so daß ein präzises Einstellen, insbesondere der gewünschten Mischwassertemperatur, schwierig ist.

Der Erfindung liegt die Aufgabe zugrunde, ein Mischventil der eingangs genannten Gattung dahin gehend zu verbessern, daß mit einfachen Mitteln der Schwenkwinkel zur Einstellung des Mischungsverhältnisses vergrößert werden kann.

Diese Aufgabe wird erfindungsgemäß durch die im kennzeichnenden Teil des Anspruchs 1 angegebenen Merkmale gelöst. Eine bevorzugte Ausgestaltung der Erfindung ist in dem Anspruch 2 angegeben.

Durch den Versatz der Drehachse der Steuerscheibe zu dem Zentrum der Ventilsitzscheibe kann der Schwenkwinkel zur Einstellung des Mischungsverhältnisses wesentlich vergrößert werden, so daß hierdurch eine feinfühligere Einstellung des Mischungsverhältnisses mit dem Griffstück ermöglicht wird und insbesondere auch der bevorzugte Mischwassertemperaturbereich von ca. 30 bis 45° C, die sogenannte Komfortzone, wesentlich verbessert und feinfühlig die Temperatur des anfließenden Wassers eingestellt werden kann.

Ein Ausführungsbeispiel der Erfindung ist in der Zeichnung dargestellt und wird im folgenden näher beschrieben Es zeigt

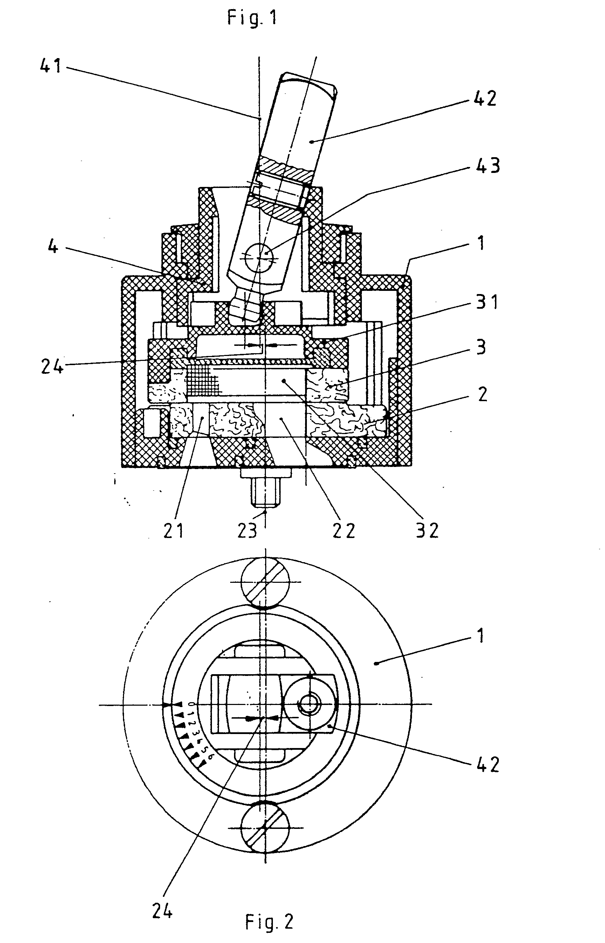

Figur 1 eine Mischventilbaueinhelt bzw. Ventilkartusche im Längsschnitt, wie sie in Sanitärarmaturen eingesetzt wird;

Figur 2 eine Draufsicht der Mischventilbaueinheit gemäß Figur 1;

Figur 3 eine Draufsicht der aufeinandergelagerten Ventilscheiben gemäß Figur 1 ohne Achsversatz (Stand der Technik);

Figur 4 die Ventilscheiben in Draufsicht gemäß Figur 1 mit Versatz der Achsen,gemäß Erfindung.

Das Mischventil ist in einem etwa zylindrischen Ventilgehäuse 1 zu einer Baueinheit zusammengefaßt, die insgesamt in einer Sanitärarmatur eingesetzt werden kann. In dem Bodenbereich des Ventilgehäuses 1 ist eine Ventilsitzscheibe 2 aus keramischem Material ortsfest gelagert und mit Einlaßöffnungen 21 für Kaltwasser und Warmwasser sowie einer Auslaßöffnung 22 für das Mischwasser versehen und mit entsprechenden Kanälen in der nicht dargestellten Sanitärarmatur verbunden. An der Ventilsitzscheibe 2 ist eine aus keramischem Material hergestellte Steuerscheibe 3 mit einem Misch- und Umlenkkanal 32 angelagert. Die aneinanderliegenden Flächen der beiden Scheiben sind zur Gewährleistung eines dichten Paßsitzes mit hochpolierten Oberflächen versehen. Die Steuerscheibe 3 ist mit einer Führungs- und Abdeckhaube 31 an der von der Ventilsitzscheibe abgekehrten Stirnseite bewegungsfest verbunden, wobei die Abdeckhaube den als glatten Durchbruch ausgebildeten Misch- und Umlenkkanal 32 an der einen Stirnseite verschließt. Die Führungs- und Abdeckhaube 31 wird andererseits von einer drehbar im Ventilgehäuse 1 gelagerten Anlagebuchse 4 aufgenommen, wobei außerdem in dieser Buchse auf der Drehachse 41 ein doppelarmiger Hebel 42 angeordnet ist, der neben den gemeinsammen Drehmöglichkeiten mit der Anlagebuchse 4 noch um eine senkrecht zur Drehachse 41 liegende Kippachse 43 ausgelenkt werden kann. Der Hebel 42 ist dabei mit seinem inneren Hebelarm mit der Anlagebuchse 4 verbunden, so daß durch ein Auslenken eines am äußeren Teil des Hebels 42 angeordneten Griffstücks (in der Zeichnung nicht dargestellt) die Führungs- und Abdeckhaube 31 mit der Steuerscheibe 3 radial zur Ventilsitzscheibe 2 verschoben werden, so daß hierdurch eine Durchflußmengenregulierung erfolgen kann. Durch ein Verschwenken des nicht dargestellten Griffstücks bzw. des Drehens der Anlagebuchse 4 zusammen mit dem Hebel 42 wird die Führungs- und Abdeckhaube 31 zusammen mit der Steuerscheibe 3 entsprechend zur Ventilsitzscheibe 2 verdreht und bewirkt so eine Bestimmung des Mischungsverhältnisses des zufließenden kalten und warmen Wassers.

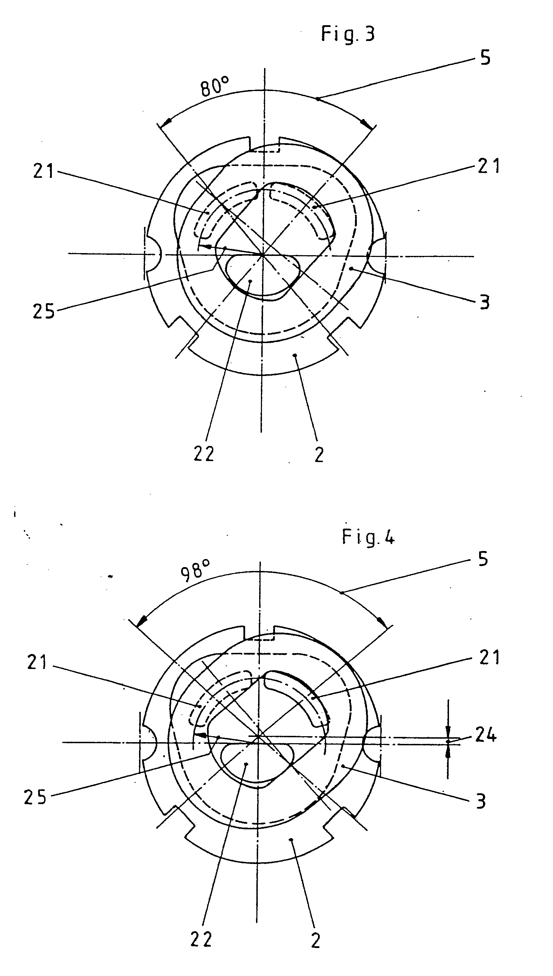

Die Drehachse der Anlagebuchse 4 in dem Ventilgehäuse 1 ist versetzt zu der Mittelachse 23 der Ventilsitzscheibe 2 angeordnet, wobei die Eintrittsöffnungen, wie insbesondere der Figur 4 zu entnehmen ist, als Kreissegmente in der einen Hälfte der kreisförmigen Ventilsitzscheibe 2 symmetrisch angeordnet sind und der Versatz 24 etwa 0,1 des mittleren Radius 25 des Kreisringes,auf dem die Einlaßöffnungen 21 angeordnet sind, beträgt.

Wie ein Vergleich der Figuren 3 und 4 zeigt, kann der maximale Drehwinkel 5 des Ventils bei koaxialen Mittelachsen gemäß Figur 3 von 80° auf 98° bei einem entsprechenden Versatz der Mittelachsen gemäß Figur 4 erzielt werden. Entsprechend dem maximalen Drehwinkel 5 vergrößert sich hierbei auch der Bereich der sogenannten Komfortzone, in dem Mischwasser von 30 bis 45° C erzeugt wird, so daß insgesamt eine feinfühligere Einstellung der Temperatur des Mischwassers ermöglicht wird.

## Patentansprüche

1. Mischventil für Sanitärarmaturen, bestehend aus einem etwa zylindrischen Ventilgehäuse (1) mit einer Mittelachse (23), einer Ventilsitzscheibe (2), die zwei Einlaßöffnungen (21) für Kaltwasser und Warmwasser und eine Auslaßöffnung (22) für das Mischwasser aufweist und im Ventilgehäuse (1) ortsfest konzentrisch zu dessen Mittelachse (23) gelagert ist, wobei diese Öffnungen (21,22) um die Mittelachse (23) herum mit Abstand angeordnet sind, einer Steuerscheibe (3), die auf der Ventilsitzscheibe (2) verstellbar angelagert ist und mit einem Misch- und Umlenkkanal (32) versehen ist, wobei durch Drehung der Steuerscheibe (3) das Mischungsverhältnis und durch deren radiales Verschieben die Auslaufmenge einstellbar ist, einer Anlagebuchse (4), die im Ventilgehäuse (1) drehbar gelagert ist und eine Kippachse (43) für die Aufnahme eines doppelarmigen Hebels (42) aufweist, der mit einem Griffstück zur Steuerung verbunden ist, dadurch gekennzeichnet, daß die gemeinsame Drehachse (41) der Steuerscheibe (3) und der Anlagebuchse (4) parallel in Richtung auf die Einlaßöffnungen (21) über einen vorbestimmten Abstand versetzt zur Mittelachse (23) des Ventilgehäuses (1) und der Ventilsitzscheibe (2) angeordnet ist.

2. Mischventil nach Anspruch 1, dadurch gekennzeichnet, daß wenigstens die Einlaßöffnungen (21) als Kreisringsegmente in der einen Hälfte der kreisförmigen Ventilsitzscheibe (2) symmetrisch angeordnet sind und der Versatz (24) der Drehachse (41) zum Zentrum der Ventilsitzscheibe (2) etwa 0,1 des mittleren Radius (25) des Kreisringes beträgt.

## Claims

1. Mixer valve for sanitary fittings, comprising an approximately cylindrical valve housing (1) having a central axis (23), a valve seat disc (2) that has two inlet openings (21) for cold water and hot water and an outlet opening (22) for the mixed water and is mounted in a fixed manner in the valve housing (1) coaxially with the central axis (23) thereof, these openings (21, 22) being arranged around the central axis (23) at a distance therefrom, a control disc (3) that is displaceably mounted on the valve seat disc (2) and is provided with a mixing and guiding channel (32), it being possible to adjust the mixing ratio by rotating the control disc (3) and to adjust the amount of water discharged by moving the control disc (3) radially, and a mounting bush (4) that is rotatably mounted in the valve housing (1) and has a tilting axis (43) for accommodating a double-armed lever (42) provided with a handle for control, characterised in that the common axis of rotation (41) of the control disc (3) and the mounting bush (4) is arranged parallel to the central axis (23) of the valve housing (1) and the valve seat disc (2) and is displaced relative thereto by a pre-determined distance in the direction of the inlet openings (21).

2. Mixer valve according to claim 1, characterised in that at least the inlet openings (21) are arranged symmetrically in the form of segments of a ring in the one half of the circular valve seat disc (2) and the displacement (24) of the axis of rotation (41) relative to the centre of the valve seat disc (2) is approximately 0.1 times the average radius (25) of the ring.

## Revendications

1) Mitigeur pour installations sanitaires, constitué d'une cage de soupape (1) sensiblement cylindrique, comportant un axe central (23), un disque (2) formant siège de soupape, qui offre deux orifices d'entrée (21) pour l'eau froide et pour l'eau chaude, et un orifice de sortie (22) du mélange d'eaux, et qui est placé dans la cage de soupape (1), fixe, concentriquement à l'axe central (23), pendant que les orifices (21, 22) sont disposés sur le pourtour par rapport à l'axe central (23) à une certaine distance de ce dernier, et comportant aussi un disque de commande (3), qui est monté réglable sur le disque (2) formant siège de soupape, et qui est pourvu d'un canal mélangeur et d'un canal de déviation (32), pendant que, par rotation du disque de commande (3), on peut régler le rapport de mélange et, par déplacement radial de ce disque, on peut régler le débit, comportant aussi une douille d'appui (4) qui est montée rotative dans la cage de soupape (1) et qui présente un axe de basculement (43), destiné à recevoir un levier à deux bras (42), qui est relié pour être commandé, avec une poignée, mitigeur caractérisé en ce que l'axe de rotation commun (41) du disque de commande (3) et de la douille d'appui (4) est décalé parallèlement sur une distance déterminée à l'avance, dans la direction des orifices d'entrée (21), par rapport à l'axe central (23) de la cage de soupape (1) et au disque formant siège de soupape (2).

2) Mitigeur suivant la revendication 1, caractérisé en ce qu'au moins les orifices d'entrée (21), réalisés sous la forme de segments d'un anneau circulaire, sont disposés symétriquement dans l'une des moitiés du disque (2) circulaire formant siège de soupape, et que le décalage (24) de l'axe de rotation (41) par rapport au centre du disque formant siège de soupape (2), se monte à environ 0,1 du rayon moyen (25) de l'anneau circulaire.

0 110 339

Fig. 1

Fig. 2

1

Fig. 3

80°

5

21

21

25

3

22

2

Fig. 4

98°

5

21

21

25

24

3

22

2